(19) Europäisches Patentamt
European Patent Office
Office européen des brevets

(11) Veröffentlichungsnummer: **0 332 809**
**A2**

(12) **EUROPÄISCHE PATENTANMELDUNG**

(21) Anmeldenummer: **89100854.2**

(51) Int. Cl.4: **H04Q 11/04**

(22) Anmeldetag: **19.01.89**

(30) Priorität: **14.03.88 DE 3808413**

(43) Veröffentlichungstag der Anmeldung:
**20.09.89 Patentblatt 89/38**

(84) Benannte Vertragsstaaten:
**AT BE CH FR IT LI LU NL**

(71) Anmelder: **TELENORMA Telefonbau und Normalzeit GmbH**
**Mainzer Landstrasse 128-146**
**D-6000 Frankfurt am Main(DE)**

(72) Erfinder: **Maier, Klaus, Dipl.-Ing.**
**Georgenstrasse 2a**
**D-6350 Bad Nauheim 3(DE)**

(54) **Digitales Kommunikations-Vermittlungssystem, insbesondere Nebenstellensystem für Sprache, Daten, Bilder, Bildtelefon, usw.**

(57) Das aus mehreren Vermittlungsanlagen bestehende digitale Kommunikations-Vermittlungssystem, soll alle Arten von Nutz- und Signalisierungsinformationen in einheitlicher Form zwischen Sender und Empfänger austauschen können. Die einzelnen Vermittlungsanlagen sollen über einheitliche Schnittstellen miteinander verbunden werden können.

Die innerhalb einer Vermittlungsanlage bestehenden Anschlußorgangruppen, welche jeweils vorwiegend mit Anschlußorganen der gleichen Kategorie beschaltet sind, sind jeweils über eine einheitliche digitale Schnittstelle mit einem ohne festen Zeitlagenzuordnung arbeitenden Parallel-Bus verbunden, worüber der gesamte Informationsaustausch stattfindet. Außerdem ist mindestens ein zu anderen Vermittlungsanlagen des Kommunikations-Vermittlungssystems führender ebenfalls ohne feste Zeitlagenzuordnung arbeitender Seriell-Bus vorgesehen, der über eine Seriell-Bus-Schnittstelle mit dem Parallel-Bussystem verbunden ist. Das Parallel-Bussystem und auch der Seriell-Bus haben dabei die Eigenschaften von Koppelfeldern, weil beim Austauschen von gleichartigen Informationspaketen eine direkte Adressierung der Anschlußorgane erfolgt.

Das digitale Kommunikations-Vermittlungssystem läßt sich überall dort vorteilhaft einsetzen, wo Vermittlungsanlagen zu einem Anlagenverbund zusammengeschaltet werden sollen. Die jeweils selbständig funktionsfähigen Vermittlungsanlagen können auch als Teile einer großen Vermittlungsanlage, insbesondere Nebenstellenanlage zusammengeschaltet werden.

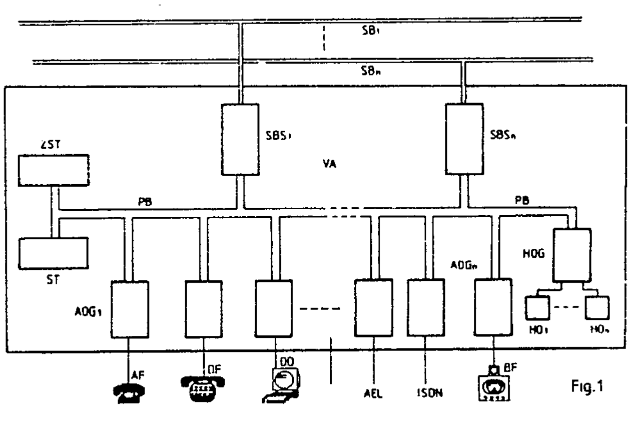

Fig.1

EP 0 332 809 A2

Xerox Copy Centre

# Digitales Kommunikations-Vermittlungssystem, insbesondere Nebenstellensystem für Sprache, Daten, Bilder, Bildtelefon usw.

Die Erfindung betrifft eine digitales Kommunikations-Vermittlungssystem für Sprache, Daten, Bilder, Bildtelefon usw. nach dem Oberbegriff des Patentanspruchs 1.

Kommunikations-Vermittlungssysteme haben ganz allgemein betrachtet die Aufgabe, aus einer Vielzahl von Endgeräten diejenigen - meistens zwei - so miteinander zu verbinden, daß ein gegenseitiger Informationsaustausch stattfinden kann. Seitdem es möglich ist, Informationen mit Hilfe des elektrischen Stroms zu übertragen, sind sehr viele unterschiedliche Vermittlungssystems bekannt geworden, die in den meisten Fällen für ganz spezifische Aufgaben und auch oft nur für eine bestimmte Art von Informationsübertragung ausgelegt sind. Als Verbindungsmedien sind Wähler, Relais und elektronische Koppelpunkte im Einsatz, deren jeweilige Eigenschaften die Möglichkeiten einer Informationsübertragung beeinflussen. Mit einer einzelnen Vermittlungsanlage lassen sich nur eine begranzte Anzahl von Verbindungswünschen erfüllen. Auch um die räumlichen Entfernungen zwischen den Endergäten zu überbrücken, müssen Vermittlungssysteme unterschiedlicher Art so aneinander angepaßt werden, daß, sowohl die vermittlungstechnischen Kriterien, als auch die Nutzinformationen zwischen den einzelnen Vermittlungsanlagen und auch den Endgeräten austauschbar sind.

In den TN-Nachrichten 1972, Heft 73 ist ab Seite 23 ein Aufsatz abgedruckt mit dem Titel "Querverbindungsverkehr zwischen Fernsprech-Nebenstellenanlagen - von der Gleichstromtechnik bis zur Tonfrequenzwahl." Hier ist auf Seite 29 in einigen Abbildungen dargestellt, auf welche Weise Fernsprech-Nebenstellenanlagen miteinander verbunden sein können. Unabhängig von der inneren Struktur einer jeden Fernsprech-Nebenstellenanlage, wird der gesamte Informationsaustausch auf den einzelnen Verbindungsleitungen abgewickelt. Wie dies im einzelnen geschehen kann, ist für den Austausch von vermittlungstechnischer Information in Bildern dargestellt und beschrieben. Über den Austausch von Nutzinformation sind in diesem Aufsatz keine Angeben gemacht, weil es sich ausschließlich um Fernsprechanlagen handelt, wobei das Original-Analog-Signal zwischen den Fernsprechendgeräten übertragen wird. Es ist auch nichts darüber ausgesagt, auf welche Weise innerhalb einer Nebenstellenanlage die Verbindungen zwischen den Nebenstellenanschlüssen untereinander und mit den Verbindungsleitungen durchgeschaltet werden. Da sämtliche Anpassungsmaßnahmen für das Zusammenschalten verschiedener Nebenstellenanlagen ausschließlich bei den Verbindungsleitungen vorgenommen werden, sind die einzelnen Möglichkeiten der Durchschaltung innerhalb einer jeden Fernsprechnebenstellenanlage voneinander unabhängig. Es kann sich also um räumlich durchschaltende Koppelfelder, um Zeitmultiplexvermittlungen oder um Wähleranlagen handeln, welche in der geschilderten Art miteinander verbunden sein können.

Eine Schaltungsanordnung zum Übertragen von Signalisierungsinformationen und Datensignalen ist aus der DE-US 32 34 540 bekannt. Es handelt sich dabei um eine Fernschreibnebenstellenanlage, bei der als internes Durchschaltemedium ein Bus-System benutzt wird. Die seriell von den Teilnehmerendgeräten einlaufenden Datenströme werden von Leitungssteuereinrichtungen aufgenommen, ausgewertet und an die zentrale Steuereinrichtung übergeben. Entsprechend den bestehenden Verbindungszuständen werden die einzelnen Daten von der zentralen Steuereinrichtung adressiert so daß sie am Verbindungsziel empfangen werden können. Es handelt sich dabei um einen Synchronbetrieb, wobei die zentrale Steuereinrichtung für jede einzelne Informationsübertragung eingeschaltet werden muß. Bei einer derartigen Konfiguration sind nur Datenströme mit einer geringen Bandbreite übertragbar, so daß die Kapazität einer derartigen Vermittlungsanlage begrenzt ist. Die einzelnen Teilnehmerendgeräte werden in Gruppen zusammengefaßt, welche dezentral gesteuert werden. Für den Übergang zu einer anderen Vermittlungsanlage oder in eine andere Netzebene werden einzelne Leitungen benutzt, die, wie zuvor beschrieben worden ist, individuell an die jeweilige Gegenanlage angepaßt werden müssen. Auch diese Leitungen sind in Gruppen zusammengefaßt und stehen über das Bussystem mit den übrigen Leitungsgruppen, woran Endgeräte angeschlossen sind, in Verbindung. Der anlageninterne Datenaustausch findet ausschließlich über das Bussystem statt, wobei nur eine einzige Art von Daten (Telex) vermittelt werden kann.

In der ntz, Band 40 1987 Heft 8 ist ab Seite 572 unter der Rubrik Vermittlungstechnik ein Aufsatz mit dem Titel: "Asynchrone Seitvielfachübermittlung für Breitbandnetze" abgedruckt. Es wird dabei davon ausgegangen, daß möglichst nahe bei den Endgeräten eine Paktetisierung der zu übertragenden Information stattfindet, die dann einem Koppelfeld zugeführt wird, wie dies in Bild 1 auf Seite 573 angedeutet ist. Die einzelnen Datenpakete enthalten Kennungen, damit eine Zieladresse erkannt werden kann. Es ist in diesem Aufsatz jedoch nicht angegeben, an welcher Stelle und auf welche Weise eine derartige Zieladresse erzeugt wird. Wenn diese Adressierung vom Teilnehmeranschluß vorgenommen werden muß, so müssen dort umfangreiche Steuer- und Speichereinrichtungen vorhanden sein, um die von einem Benutzer abgegebene Wahlinformation in eine Zieladresse umzusetzen, wobei insbesondere bei Fernverbindungen die Netzstrukturen und Netzhierarchien berücksichtigt werden müssen. Es ist weiterhin in diesem Aufsatz angegeben, daß für die Weitergabe von paketisierten Daten Ringsysteme geeignet sein können, wie dies in Bild 3 auf Seite 575 dargestellt ist. Dabei ist jedoch nur die Ringstruktur als solche erwähnt, ohne daß Angaben über Einzelheiten des Informationstransports erwähnt werden. Weiterhin sind Koppelfeldstrukturen aufgezeigt, die Eingänge und Ausgänge für paketierte Nachrichten enthalten. Auch hierbei ist keine über das jeweilige Koppelprinzip hinausgehende Beschreibung in diesem Aufsatz vorzufinden, weil sehr viele Möglichkeiten der asynchronen Zeitvielfachübermittlungstechnik erwähnt werden sollen, so daß in diesem Rahmen Einzelheiten nur bis zu einem gewissen Grad aufgezeigt werden können.

Die Aufgabe der vorliegenden Erfindung besteht darin, ein Kommunikations-Vermittlungssystem für alle Arten der Kommunikation vorzustellen, dessen Anlagenteile gleichartig stukturierte Informationswege aufweisen, worüber Informationspakete für Signalisierungsdaten und Nutzdaten ausgetauscht werden können, die unabhängig von der Art der Informationsquelle einheitlich gesendet und empfangen werden. Damit soll das Aufbauen größerer Vermittlungsanlagen, das Bilden von Netzgruppen und das Erweitern von Vermittlungssystem erleichtert werden, wobei keinen Unterschiede zwischen den verschiedenen Kommunikationsarten bestehen, und wobei das Zusammenwirken mit allen herkömmlichen Vermittlungssystemen und Endgeräten möglich ist.

Für die Lösung dieser Aufgabe sind Merkmale vorgesehen, wie sie im Patentanspruch 1 angegeben sind.

Damit wird in vorteilhafter Weise erreicht, daß der gesamte Informationsaustausch innerhalb des gesamten Kommunikations-Vermittlungssystems auf einheitliche Art, mit einerheitlicher direkter Adressierung zwischen allen einheitlich angeschlossenen Anschlußorgangruppen durchgeführt werden kann. Daraus ergibt sich, daß nicht unbedingt übergeordnete zentrale Steuerungshierarchien erforderlich sind, und daß eine leitungsgebundene Signalisierung nur noch an den Stellen notwendig ist, wo ein Übergang zu bestehenden herkömmlicchen Vermittlungsnetzen stattfindet.

Die in den Unteransprüchen angegebenen Weiterbildungen der Erfindung geben vorteilhafte Ausgestaltungen der Bussysteme an, womit eine optimale Ausnutzung der zur Verfügung stehenden Übertragungskapazität gewährleistet ist.

Ein Ausführungsbeispiel der Erfindung wird nachfolgend anhand von Zeichnungen näher erläutert.

Es zeigt

Fig. 1 das Blockschaltbild einer Vermittlungsanlage im Kommunikstions-Vermittlungssystem.

Fig. 2 das Blockschaltbild eines aus mehreren Vermittlungsanlagen bestehenden Kommunikations-Vermittlungssystem.

Fig. 3 Das Blockschaltbild einer Anschlußorgangruppe.

Fig. 4 Das Schema eines einheitlichen Datenpaketes.

Fig. 5 Ein Seriell-Bus in gedoppelter Ringstruktur, der als gefalteter Seriell-Bus betrieben wird.

In der Fig. 1 ist das Blockschaltbild einer selbständig funktionsfähigen Vermittlungsanlage VA dargestellt. Diese Vermittlungsanlage VA besteht aus mehreren Anschlußorgangruppen AOG1 bis AOGn, woran die aus der Vermittlungsanlage VA herausführenden Anschlußleitungen aller Art angeschlossen sind. Es ist zweckmäßig, eine Anschlußorgangruppe, z.B. AOG1 so auszulegen, daß jeweils nur eine Art von Anschlußleitungen vorkommt. Unter eine Anschlußorgangruppe AOG1 sind also eine Anzahl von gleichartigen Anschlußorganen zu verstehen, welche gemeinsam mit einer zugehörigen Steuereinrichtung, so wie dies in Fig. 3 dargestellt ist, auf einer Baugruppe untergebracht werden können. Wie in der Fig. 1 dargestellt ist, existieren solche Anschlußorgangruppen AOG1 bis AOGn für jeweils eine bestimmte Art von Endgeräten oder Externleitungen. So ist beispielsweise eine Anschlußorgangruppe AOG1 für Analog-Fernsprecher AF vorgesehen, eine andere Anschlußorgangruppe ist für Digital-Fernsprecher DF eingerichtet und eine weitere Anschlußorgangruppe ist für digitale Datenendgeräte DDE zuständig. Außerdem ist dargestellt, daß eine Anschlußorgangruppe, z.B. AOGn für Bildfernsprech-Endgeräte BFE vorhanden sein kann. Zu anderen Vermittlungssystemen führende Externleitungen haben jeweils eigene Anschlußorgangruppen AOG, so daß beispielsweise analoge Externleitungen AEL getrennt von Anschlußleitungen für das ISDN angeschlossen werden können.

Alle Anschlußorgangruppen AOG1 bis AOGn sind in gleicher Weise an ein Parallel-Bus-System PB angeschlossen, worüber alle Arten von Signalisierungs- und Nutzdaten ausgetauscht werden. Dies bedeutet, daß dieses Parallel-Bus-System PB für eine bestehende Verbindung gleichzeitig als Koppelfeld dient. An das Parallel-Bus-System PB sind außerdem eine Zugriffssteuerung ZST und eine Gruppensteuerung GST angeschlossen, welche ebenso wie die Anschlußorgangruppen AOG Datenpakete senden und empfangen können.

Außerdem ist an das Parallel-Bus-System PB eine Hilfsorgangruppe HOG angeschlossen, woran Hilfsorgane HO1 bis HOn angeschlossen sind. Bei diesen Hilfsorganen kann es sich um Wahlempfänger, Hörzeichensender, Ansagegeräte und andere von den Anschlußorgangruppen AOG gemeinsam benutzbare Einrichtungen handeln.

Über das Parallel-Bus-System PB können ebenfalls gleichartig daran angeschlossene Seriell-Bus-Schnittstellen SBS1 bis SBSn erreicht werden. Wie bereits eingangs erwähnt, ist die Vermittlungsanlage VA auch selbständig funktionsfähig, so daß auch auf die Seriell-Bus-Schnittstelle SBS verzichtet werden kann, wenn die Anschlußkapazität der Vermittlungsanlage VA ausreichend ist. Über mindestens eine Seriell-Bus-Schnittstelle, z.B. SBS1 erhält das Parallel-Bus-System PB Zugang zu mindesntes einem Seriell-Bus, z.B. SB1. Bei Bedarf können jedoch mehrere Seriell-Busse SB1 bis SBn eingerichtet werden. An jeden Seriell-Bus SB können mehrere Vermittlungsanlagen VA parallel angeschaltet werden, so wie dies in Fig. 2 dargestellt ist.

Das in Fig. 2 dargestellte gesamte Kommunikations-Vermittlungssystem KVS besteht aus mehreren jeweils selbständig funktionsfähigen Vermittlungsanlagen VA1 bis VAn, welche jeweils die gleiche, in der Fig. 1 dargestellte innere Struktur aufweisen. Alle Vermittlungsanlagen VA1 bis VAn sind über einen oder mehrere Seriell-Busse SB1 bis SBn so miteinander verbunden, daß Datenpakete in einheitlichem Format von jedem Anschlußorgan AO einer Vermittlungsanlage, z.B. VA1 zu jedem Anschlußorgan AO einer anderen Vermittlungsanlage, z.B. VAn transportiert werden können. Selbstverständlich ist dabei zu beachten, daß die an einer Verbindung beteiligten Endgeräte den gleichen Dienst beherrschen, so daß eine Dateneingabe-und -ausgabe an den beiden Endgeräten in gleicher Weise möglich ist.

In der Fig. 3 ist das Blockschaltbild einer Anschlußorgangruppe AOG dargestellt, welche aus mehreren Anschlußorganen AO1 bis AOn besteht. An jedem Anschlußorgan AO ist eine Anschlußleitung AL angeschlossen, die entweder zu einem Endgerät führt oder als Externleitung an ein anderes Vermittlungssystem angeschlossen sein kann. Wie bereits erwähnt, ist es zweckmäßig, daß die Anschlußleitungen AL1 bis ALn, welche zu einer Anschlußorgangruppe AOG gehören, gleichartige Funktionen nur einer einzigen Kategorie aufweisen. Die Anschlußorgane AO1 bis AOn sind über einen gruppeninternen Bus GIB mit einer Anschlußorgansteuerung AOST verbunden. Diese Anschlußorgansteuerung AOST kann selbstverständlich dann einfacher ausgelegt werden, wenn alle Anschlußorgane AO dieser Anschlußorgangruppe AOG ein- und derselben Kategorie angehören.

Die Anschlußorgansteuerung AOST steuert außerdem eine Parallel-Bus-Schnittstelle PBS, welche den gruppeninternen Bus GIB mit dem zu anderen Anschlußorgangruppen AOG und zu einem Seriell-Bus SB führenden Parallel-Bus-System PB verbindet. In der Parallel-Bus-Schnittstelle PBS werden mit Hilfe der Anschlußorgansteuerung AOST alle von den Anschlußleitungen kommende Kriterien sowie auch die Nutzdaten in einheitlich formatierte Datenpakete mit zugehöriger Adresse verpackt. welche dann auf das Parallel-Bus-System PB gegeben werden. In umgekehrter Richtung werden an die betreffende Anschlußorgangruppe AOG adressierte Datenpakete mit Hilfe der Parallelbus-Schnittstelle PBS analysiert und entweder aus Signalisierungsinformationen oder in der jeweiligen Form von Nutzdaten so auf das jeweilige Anschlußorgan AO gegeben, daß ein daran angeschlossenes Endgerät oder ein anderes Vermittlungssystem diese Informationen empfangen und richtig interpretieren kann.

In der Fig. 4 ist das Schema eines Datenpaketes aufgezeigt, wie es in einheitlicher Form über das Parallel-Bus-System PB in einheitlicher Form transportiert werden soll. Das Paket besteht aus mehreren Worten W1 bis Wn mit einer Breite von m Bits. Das erste Wort W1, welches grundsätzlich auch zeitlich zuerst gesendet wird, enthält die aus mehreren Teiladressen bestehende Adreßinformation ADR. Für die Adreßinformation ADR nicht benötigte Bits können für einen Sicherungscode SC verwendet werden. Auf die Art des Sicherungscodes SC und seine Anwendung im Kommunikations-Vermittlungssystem KVS soll an dieser Stelle nicht näher eingegangen werden. Die Adreßinformation ADR besteht aus einer Seriell-Bus-Nummer SBNR, einer Vermittlungsanlagennummer VANR, einer Gruppennummer GRNR und einer Anschlußorgannummer AONR. Die Anschlußorgannummer AONR besteht beispielsweise aus 5 Bit, wenn man davon ausgeht, daß innerhalb einer Anschlußorgangruppe AOG weniger als 32 Anschlußorgane vorgesehen sind. Mit der Gruppennummer GRNR wird die Anschlußorgangruppe AOG als solche adressiert. Die beiden anderen Teiladressen VANR und SBNR sind für die Adressierung der Vermittlungsanlage VA und für die Bezeichnung des Seriell-Busses SB vorgesehen, wenn Datenpakete über einen Seriell-Busse SB gesendet werden sollen. Damit werden die betreffenden Seriell-Bus-Schnittstellen SBS innerhalb einer Vermittlungsanlage VA adressiert. Die Anzahl der Bits, welche für eine Teiladresse benötigt werden, hängt ab von der Größe und der Aufteilung des gesamten Kommunikations-Vermittlungssystems KVS. Für die Gruppennummer GRNR genügen beispielsweise 7 Bit, wenn man davon ausgeht, daß eine Vermittlungsanlage VA nicht mehr als 128 Anschlußorgangruppen AOG hat. In ähnlicher Weise können die Anzahlen von Bits für die Vermittlungsanlagennummer VANR und für die Seriell-Busnummer SBNR vergeben werden. Wichtig dabei ist lediglich, daß diese Festlegungen im Gesamten Kommunikations-Vermittlungssystem einheitlich gelten.

Die übrigen Worte W2 bis Wn innerhalb eines Paketes stellen die Information da, welche als Nutzdaten und/oder Signalisierungsdaten zu übertragen ist. Wenn das Parallel-Bus-System PB, wie bereits angedeutet wurde, eine Bitbreite von m = 32 aufweist, so können in jedem Wort 4 Bytes a 8 Bit untergebracht werden. Wenn ein Paket beispielsweise aus 5 Worten besteht, wovon das erste Wort W1 für die Adresse ADR vergeben ist, so können in den übrigen 4 Worten insgesamt 16 Bytes während des für die Sendung eines Pakets zur Verfügung stehenden Zeitraums über das Parallel-Bus-System PB übertragen werden.

Anhand eines einfachen Beispiels einer Fernsprechverbindung soll nun das Zusammenwirken der einzelnen Teile einer Vermittlungsanlage VA beschrieben werden. Es sei angenommen, daß von einem Analog-Fernsprecher AF aus eine Verbindung zu einem Digitalfernsprecher DF aufgebaut werden soll. Das Abnehmen des Handapparats wird von der Anschlußorgansteuerung AOST (Fig. 3) innerhalb der zuständigen Anschlußorgangruppe AOG1 erkannt. Da in den Speichern der Anschlußorgansteuerung AOST noch kein Verbindungszustand für das betreffende Anschlußorgan AO eingetragen war, handelt es sich um eine Neubelegung. Daraufhin gibt die Anschlußorgansteuerung AOST an die Parallel-Bus-Schnittstelle PBS den Befehl, eine Meldung an die Gruppensteuerung GST abzusenden. Diese Meldung hat die Form eines vollständigen Pakets und stellt eine Anfrage dar, an die Gruppensteuerung GST, ob auf dem Parallel-Bus PB noch genügend Bandbreite frei ist, um eine Fernsprechverbindung herstellen zu können. Wenn genügend Bandbreite zur Verfügung steht, so sendet die Gruppensteuerung GST eine entsprechende Meldung an die Anschlußorgangruppe AOG1, welche in deren Parallel-Bus-Schnittstelle PBS empfangen und an die Anschlußorgansteuerung AOST weitergeleitet wird.

Aufgrund dieser positiven Meldung gibt die Anschlußorgansteuerung AOST der Parallel-Bus-Schnittstelle PBS den Befehl, diejenigen Datenpakete zu empfangen, welche den Wählton enthalten. Diese Datenpakete werden permanent von der Hilfsorgangruppe HOG ausgesendet und sind so adessiert, daß sie von jeder Anschlußorgangruppe AOG empfangen werden können. Die in einem solchen Paket enthaltende Information I wird im Anschlußorgan AO des Analogfernsprechers AF so umgesetzt, daß der Teilnehmer den Wählton empfängt.

Die daraufhin vom Teilnehmer abgegebene Wahlinformation, beispielsweise Nummernschalterwahl, wird ziffernweise in der Anschlußorgansteuerung AOST empfangen. Nach dem Ende einer jeden Wahlziffer wird von der Parallel-Bus-Schnittstelle PBS aus ein Paket auf den Parallel-Bus PB gesendet, welches an die Gruppensteuerung GST adressiert ist. Als Information I ist die betreffende Wahlziffer darin enthalten. Die Gruppensteuerung GST sammelt die einzelnen Wahlziffern und stellt jeweils fest, wann genügend Ziffern für eine gesamte Auswertung der der Wahlinformation vorhanden sind. Nach dem Empfang der ersten Wahlziffer wird von der Anschlußorgansteuerung AOST veranlaßt, daß in der Parallel-Bus-Schnittstelle PBS das den Wählton beinhaltende Paket nicht mehr empfangen wird. Wenn die Gruppensteuerung GST die komplette Wahlinformation empfangen hat, so wird anhand des dort vorhandenen Rufnummernplans die Zieladresse des gewünschten Anschlusses, z.B. DF ermittelt. Diese besteht aus der Gruppennummer GRNR und der Anschlußorgannummer AONR. Diese Adresse gelangt in ein Paket welches an die Anschlußorgangruppe AOG des gewünschten Teilnehmers gesendet wird. Die in diesem Paket enthaltene Information I stellt eine Anfrage an die Anschlußorgangruppe AOG des gewünschten Teilnehmers dar, ob der gewünschte Anschluß frei oder besetzt ist. Außerdem wird die Adresse des anrufenden Teilnehmers AF mitgeliefert und in der Anschlußorgangruppe AOG des gewünschten Teilnehmers zwischengespeichert. Wenn die Anschlußorgansteuerung AOST, welche für den gerufenen Teilnehmer zuständig ist, festgestellt hat, ob der Teilnehmer frei oder besetzt ist, wird ein entsprechendes Paket in der betreffenden Parallel-Bus-Schnittstelle PBS der Anschlußorgangruppe AOG des gerufenen Teilnehmers zusammengestellt, welches an die Anschlußorgangruppe AOG1 des rufenden Teilnehmers gesendet wird. Die darin enthaltene Information I wird von der Anschlußorgangruppe AOST der Anschlußorgangruppe AOG1 so ausgewertet, daß am Endgerät AF des rufenden Teilnehmeranschlusses der Freiton oder der Besetztton empfangen werden kann. Die digitalisierten Frequenzen, bzw. Rhythmen des Frei- bzw. Besetzttons werden wie zuvor beschrieben worden ist, dann direkt vom Parallel-Bus PB abgenommen.

Bei freiem Teilnehmer wird in der Anschlußorgangruppe AOG des angerufenen Teilnehmers der Rufzustand eingestellt, indem über den Signalisierungskanal dem betreffenden Endgerät DF das Rufkriterium mitgeteilt wird, wodurch dort das Anrufsignal entsteht. Wenn der gerufene Teilnehmer sich meldet, wird an seinem digitalen Fernsprecher DF eine Meldung erzeugt, die zunächst über den Signalisierungskanal zum Anschlußorgan AO gelangt. Von dort aus wird über den gruppeninternen Bus GIB die zuständige Anschlußorgansteuerung AOST informiert. Die Anschlußorgansteuerung AOST veranlaßt daraufhin, die Parallel-Bus-Schnittstelle PBS die vom angerufenen Teilnehmeranschluß ankommenden digitalisierten Sprachproben einzusammeln und zwischenzuspeichern. Wenn so viele Sprachproben angekommen sind, daß ein Paket gefüllt ist, so meldet die Parallel-Bus-Schnittstelle PBS über eine nicht dargestellte individuelle Leitung der Zugriffssteuerung ZST dieses Kriterium auf direktem Wege. Sobald die Zugriffssteuerung ZST einen freien Zeitraum auf dem Parallel-Bus-PB erkennt, erhält die Parallel-Bus-Schnittstelle PBS der Anschlußorgangruppe AOG des angerufenen Teilnehmers die Erlaubnis, das Paket abzusenden. Da wie zuvor beschrieben worden ist, ein Adressenaustausch zwischen den beteiligen Anschlußorgangruppen AOG stattgefunden hat, wird die Adresse des rufenden Teilnehmers jedem Paket, welches von der Anschlußorgangruppe AOG des gerufenen Teilnehmers aus gesendet wird, beigefügt. Dieses Paket wird also von der Anschlußorgangruppe AOG1 des anrufenden Teilnehmers in der dortigen Parallel-Bus-Schnittstelle PBS empfangen und über den gruppeninternen Bus GIB zum Anschlußorgan AO des anrufenden Teilnehmers weitergegeben. Die im Informationsbereich I enthaltene Nutzinformation wird dabei portionsweise so an das Anschlußorgan AO weitergegeben, daß eine Digital-Analog-Wandlung in bekannter Weise stattfinden kann. In umgekehrter Richtung werden ebenfalls Pakete abgesendet, die selbstverständlich mit der Adresse des angerufenen Teilnehmers (GRNR, AONR) versehen sind. In der Anschlußorgangruppe AOG des angerufenen Teilnehmers werden diese Pakete empfangen und ebenfalls portionsweise von der dortigen Parallel-Bus-Schnittstelle PBS so ausgegeben, daß sie kontinuierlich auf die digitale Anschlußleitung gelangen können.

Auf diese Weise ist eine Fernsprechverbindung zustande gekommen, wobei der Parallel-Bus PB für jede Gesprächsrichtung beim Senden und Empfangen von Paketen jeweils kurzzeitig in Anspruch genommen wird. Dabei müssen keine festen Zeitlagen vergeben werden, sondern est ist lediglich dafür zu sorgen, daß entsprechend der Bandbreite die Abstände zwischen zwei Paketen nicht zu groß wird. Wenn beispielsweise, wie dies bei der Beschreibung von Fig. 4 erwähnt wurde, die Informationskapazität I eines Paketes 16 Bytes beträgt, wovon jedes einzelne Bytes beispielsweise ein nach dem PCM-Verfahren codiertes Sprachprobenwort enthält, so muß mindestens alle 2ms ein Paket in einer Gesprächsrichtung gesendet und empfangen werden. Dies ergibt sich daraus, daß bei einer Sprachabtastung von 8 kHz alle 125 µs ein PCM-Wort entsteht.

Bei der auf diese Weise zustande gekommenen Fernsprechverbindung werden in den beteiligten Parallel-Bus-Schnittstellen PBS die von den Teilnehmern kommenden Informationen portionsweise, beispielsweise als PCM-Worte, gesammelt bis jeweils ein Paket vollkommen gefüllt ist. Sodann wird von der betreffenden Parallel-Bus-Schnittstelle PBS eine Meldung an die Zugriffssteuerung ZST abgegeben, damit die Sendeerlaubnis für dieses Paket erteilt werden kann, Der auf diese Weise zwischen den beteiligten Anschlußorgan AOG stattfindende Informationsaustausch wird erst dann beendet, wenn einer der beiden Teilnehmer die Verbindung auslöst. In gleicher Weise würde auch ein Informationsaustausch stattfinden, wenn die beteiligten Anschlußorgan AO der gleichen Anschlußorgangruppe AOG angehören würden. Auch für derartige Verbindungen wird das Parallel-Bus-System PB in gleicher Weise in Ansprugh genommen.

Das Beenden einer Verbindung wird durch die Anschlußorgansteuerung AOST der betreffenden Anschlußorgangruppe AOG festgestellt. Daraufhin wird für die Parallel-Bus-Schnittstelle PBS ein Paket zusammengestellt, welches als Information I eine Auslösemeldung enthält. Dieses Paket wird ebenso wie zuvor die Nutzdatenpakete zu der Anschlußorgangruppe AOG des jeweiligen Gesprächspartners gesendet. Dieses Paket ist nun aber nicht an das Anschlußorgan AO sondern an die Anschlußorgansteuerung AOST adressiert. Die Anschlußorgansteuerung AOST des noch an der Verbindung angeschalteten Teilnehmers veranlaßt daraufhin, daß innerhalb der Parallel-Bus-Schnittstelle PBS Datenpakete empfangen werden, welche von der Hilfsorgangruppe HOG kommen und beispielsweise den Besetztton enthalten. Bei einem derartigen Auslösevorgang muß also die Gruppensteuerung GST nicht beteiligt werden.

Der Aufbau von Verbindungen zwischen Endgeräten anderer Art beispielsweise digitalen Datenendgeräten DD oder auch zwischen Bildfernsprechern BF verläuft in ähnlicher Weise, wie dies am Beispiel einer Fernsprechverbindung bereits beschrieben wurde. Es ist lediglich, insbesondere für Bildfernsprechen BF, eine größere Bandbreite auf dem Parallel-Bus-System PB erforderlich. In der Praxis bedeutet dies, daß die Datenpakete in entsprechend kürzeren Zeitabständen gesendet werden müssen.

Wenn Verbindungen aufgebaut werden, deren Ziele außerhalb des Kommunikationsvermittlungssystems KVS liegen, so werden Anschlußorgangruppen AOG angesteuert, woran analoge Externleitungen AEL oder Anschlußleitungen des ISDN angeschlossen sind. Die für diese Anschlußleitungen zuständigen Anschlußorgangruppen AOG formen die auf den Anschlußleitungen zu übertragenden Informationen so um, daß innerhalb des Kommunikationsvermittlungssystems KVS durch Senden und Empfangen von Paketen nach dem gleichen Schema verfahren werden kann, wie dies zuvor geschildert wurde.

Wenn Verbindungen zu anderen Vermittlungsanlagen VA, welche zu dem hier betrachteten Kommunikations-Vermittlungssystem KVS gehören, aufgebaut werden sollen, so geschieht dies, über einen Seriell-Bus SB, woran alle Vermittlungsanlagen VA1 bis VAn angeschlossen sind. Beim Verbindungsaufbau und auch während einer bestehenden Verbindung werden in einem solchen Fall über einen Seriell-Bus BS die betreffenden Vermittlungsanlagen VA adressiert. Auf dem Parallel-Bus-System PB werden die Datenpakete zwischen der beteiligen Anschlußorgangruppe AOG und der jeweiligen Seriell-Bus-Schnittstelle SBS in gleicher Weise ausgetauscht, wie dies zwischen zwei Anschlußorgangruppen AOG der Fall ist. Innerhalb der Seriell-Bus-Schnittstelle SBS werden die vom Parallel-Bus-System PB kommenden Pakete zwischengespeichert, seriell gewandelt und mit einer hohen Bitrate auf den Seriell-Bus SB gesendet. Seriell von dort empfangene Daten werden ebenfalls zwischengespeichert, seriell-parallel-gewandelt und dann in ein Paket verpackt auf das Parallel-Bus-System PB gegeben. Beim Senden von Paketen über die Grenzen einer Vermittlungsanlage VA hinaus wird die Adresse ADR eines Paketes durch die Seriell-Busnummer SBNR und die Vermittlungsanlagennummer VANR ergänzt, so daß mit Hilfe der übrigen Adreßteile (GRNR und AONR) ein Anschlußorgan in der Ziel-Vermittlungsanlage direkt adressiert werden kann. Selbstverständlich wird bei der Adressierung in umgekehrter Richtung in gleicher Weise vorgegangen.

In Fig. 5 ist dargestellt, wie ein Seriell-Bus SB in der Struktur eines gedoppelten Ringssystems als gefalteter Bus betrieben wird. Die in den Seriell-Bus-Schnittstellen SBS1 bis SBSn befindlichen Sender und Empfänger sind so in Reihe geschaltet, daß sich eine Sendeleitung und in umgekehrter Richtung eine Empfangsleitung ergibt. Eine der Seriell-Bus-Schnittstellen z.B. SBS1 ist als erste Sendestelle und als letzte Empfangsstelle in den Ring eingeordnet und fungiert als Master-Station M. Die am anderen Ende des Rings befindliche Kopfstation K wird von der Seriell-Bus-Schnittstelle SBSn gebildet. An dieser Stelle findet der Übergang von der Sendeleitung SL zur Empfangsleitung EL statt. Das gedoppelte Ringsystem ist jedoch so an alle Seriell-Bus-Schnittstellen SBS1 bis SBSy sowie SBSx bis SBSn herangeführt, daß im Falle einer Leitungsunterbrechung in den dieser Unterbrechung am nächsten liegenden Seriell-Bus-Schnittstellen SBS Umschaltungen vorgenommen werden können, so daß über die andere noch intakte Seite des Rings ein Informationaustausch möglich ist.

Die zwischen den einzelnen Vermittlungsanlagen VA verlaufenden Seriell-Busse SB1 bis SBn können eine Ausdehnung von mehreren 100 m bis zu einigen Kilometern haben, so daß es möglich ist, einzelne Vermittlungsanlagen VA als Teile eines Anlagenverbundes mehr oder weniger getrennt voneinander aufzustellen. Es lassen sich damit auf einheitlicher Basis Nebenstellenanlagen zu einem Gesamtkommunikations-Vermittlungssystem zusammenschalten. Es ist außerdem denkbar, daß beispielsweise die Vermittlungsstellen eines Ortsnetzes über Seriell-Bus-Systeme SB miteinander verbunden werden können.

**Ansprüche**

1. Digitales Kommunikations-Vermittlungssystem, insbesondere Nebenstellensystem für Sprache, Daten, Bilder, Bildtelefon usw., wobei Vermittlungsanlagen mit jeweils eigenen Steuereinrichtungen aus mehreren Anschlußorgangruppen bestehen und die einzelnen Anschlußorgane mit solchen der eigenen Gruppe untereinander und auch mit den Anschlußorganen anderer Gruppen verbunden werden können, und wobei Externleitungen vorgesehen sind für die Verbindungen zu Vermittlungssystemen einer anderen Netzebene,
dadurch gekennzeichnet,
daß die innerhalb einer Vermittlungsanlage (VA), welche Teil eines ggf. weit verteilten Kommunikations-Vermittlungssystems (KVS) sein kann, bestehenden Anschlußorgangruppen (AOG1 bis AOGn), die normalerweise mit jeweils Anschlußorganen der gleichen Kategorie beschaltet sind, jeweils eine einheitliche digitale Schnittstelle (PBS) zu einem ohne feste Zeitlagenzuordnung arbeitenden Parallel-Bussystem (PB) aufweisen, wo jede Art von Information in einheitlich formatierte Datenpakete verpackt werden, die mit Adressen versehen von allen Anschlußorgangruppen (AOG1 bis AOGn) zu allen Anschlußorgangruppen (AOG1 bis AOGn) gesendet werden können,
daß mindestens ein zu anderen Vermittlungsanlagen (VA) des Kommunikationsvermittlungssystems (KVS) führender, ebenfalls ohne feste Zeitlagenzuordnung arbeitender Seriell-Bus (SB) vorgesehen ist, der über eine Seriell-Bus-Schnittstelle (SBS) mit dem Parallel-Bussystem (PB) verbunden ist,
daß jede Seriell-Busschnittstelle (SBS) an der einem Paket beigegebenen Adresse erkennt, ob das Ziel des Pakets außerhalb der eigenen Vermittlungsanlage (VA) liegt, das Paket dann entgegennimmt und über den Seriell-Bus (SB) weiterleitet,

und daß jede Seriell-Bus-Schnittstelle (SBS) an der Adresse eines auf dem Seriell-Bus (SB) gesendeten Pakets erkennt, ob dieses für die eigene Vermittlungsanlage (VA) bestimmt ist, und dieses dann auf das zugehörige Parallel-Bus-System (PB) weiterleitet.

2. Kommunikations-Vermittlungssystem nach Anspruch 1,
dadurch gekennzeichnet,
daß eine Information jeweils als Gesamtpaket pro Wort parallel in einem oder in mehreren Worten nacheinander auf dem Parallel-Bus-System (PB) übertragen wird, wobei eine Zugriffssteuerung (ZST) aufgrund aller vorliegenden Zugriffswünsche entscheidet, welche der an das Parallel-Bus-System (PB) angeschlossenen Einheiten, wie Anschlußorgangruppen (AOG), Gruppensteuerung (GST), Hilfsorgangruppe (HOG), Seriell-Bus-Schnittstellen (SBS) und Zugriffssteuerung (ZST) das nächste Paket auf das Parallel-Bus-System (PB) senden darf.

3. Kommunikations-Vermittlungssystem nach Anspruch 2,
dadurch gekennzeichnet,
daß die Zugriffssteuerung (ZST) Zugriffswünsche unterschiedlicher Priorität von den am Parallel-Bus-System (PB) angeschlossenen Einheiten (SBS,GST,AOG und HOG) angeboten bekommt, somit bei höheren Prioritäten einen bevorzugten Zugriff für ein Paket ermöglicht und bei Zugriffswünschen gleicher Priorität die Pakete in einem fairen Zuteilverfahren auf das Parallel-Bus-System (PB) gibt.

4. Kommunikations-Vermittlungssystem nach Anspruch 2,
dadurch gekennzeichnet,
daß bei jedem neuen Verbindungswunsch zunächst global entschieden wird, ob dieser zugelassen werden kann oder abgewiesen werden muß, indem die für den betreffenden Dienst erforderliche Bandbreite mit den auf den Bussystemen (PB,SB) noch verfügbaren Bandbreiten in geeigneter Weise verglichen wird, und daß die Zugriffswünsche für einzelne Pakete bei bestehenden Verbindungen unabhängig hiervon auf jeden Fall berücksichtigt werden.

5. Kommunikations-Vermittlungssystem nach Anspruch 4,
dadurch gekennzeichnet,
daß die noch verfügbaren Bandbreiten in System durch Zählen der freien Paketplätze auf den Parallel-Bus-Systemen (PB) und den Seriell-Bussen (SB) in definierten Zeitabständen erfolgt, und daß diese Informationen durch global adressierte Pakete in System verteilt werden.

6. Kommunikations-Vermittlungssystem nach Anspruch 4,
dadurch gekennzeichnet,
daß die Füllstände der Pufferspeicher in den Seriell-Bus-Schnittstellen (SBS) laufend beobachtet werden, und daß diese Information zyklisch durch global adressierte Pakete in System verteilt wird.

7. Kommunikations-Vermittlungssystem nach Anspruch 1,
dadurch gekennzeichnet,
daß auf dem Parallel-Bus-System (PB) gesendete Informationspakete grundsätzlich von allen Schnittstellen der daran angeschlossenen Einheiten (SBS, ZST,GST,AOG und HOG) empfangen werden, welche die in jedem Paket enthaltene Adresse (ADR) auswerten und die Information dann aufnehmen, wenn sie ihre eigene Adresse (z.B. GRNR) oder eine ihnen zugeordnete Globaladresse erkennen.

8. Kommunikations-Vermittlungssystem nach Anspruch 7,
dadurch gekennzeichnet,
daß das Adreßfeld (ADR) eines Paketes in seinem ersten Wort (W1) enthalten ist und in systemspezifische Abschnitte (VANR,GRNR,EANR) unterteilt ist, sowie eine Weglenkung (SBNR) enthält und daß die daraus resultierenden physikalischen Adreßbereiche teils für direkte Adressierung (z.B. AONR) und zum anderen Teil für globale Adressen (VANR) bzw. für zuordenbare Kanalnummern genutzt werden können.

9. Kommunkations-Vermittlungssystem nach Anspruch 7,
dadurch gekennzeichnet,
daß im ersten Wort (W1) eines Paketes neben der Adreßinformation (ADR) noch weitere, übrige Bits für Paketzählung sowie für eine Sicherungscode (SC) benutzt werden können.

10. Kommunikations-Vermittlungssystem nach Anspruch 1,
dadurch gekennzeichnet,
daß an dem zu einer Vermittlungsanlage (VA) gehörenden Parallel-Bus-System (PB) mindestens eine Hilfsorgangruppe (HOG) angeschlossen ist, worin Funktionen, die für mehrere Anschlußorgangruppen (AOG) gemeinsam benötigt werden, vereinigt sind.

11. Kommunikations-Vermittlungssystems nach Anspruch 1,
dadurch gekennzeichnet,
daß die zwischen dem Parallel-Bus-System (PB) und einem Seriell-Bus (SB) befindlichen Seriell-Bus-Schnittstellen (SBS) Zwischenspeicher für beide Richtungen enthalten, womit eine Geschwindigkeitsanpassung der Informationspakete sowie die Entkoppelung der Bussystems vorgenommen wird.

12. Kommuniktaions-Vermittlungssystem nach Anspruch 1,
dadurch gekennzeichnet,
daß jeder Seriell-Bus (SB) als Ring mit je einer Sendesstelle und einer Empfangsstelle pro Seriell-Bus-Schnittstelle (SBS) ausgelegt ist.

13. Kommunikations-Vermittlungssystem nach Anspruch 1, dadurch gekennzeichnet, daß jeder Seriell-Bus (SB) in topologischer Ringstruktur ausgebildet ist und wie ein logisch gefalteter Bus betrieben wird.

14. Kommunikations-Vermittlungssystem nach Anspruch 1, dadurch gekennzeichnet, daß für den Betrieb von synchronen Anschluß- und Verbindungsleitungen (z.B. 64 kBit/s, ISDN) das System synchronisiert wird, indem eine als Master geltende Vermittlungsanlage (VA) welche beispielsweise am ISDN angeschlossen ist, zyklisch global adressierte Pakete mit Synchronisationsinformation im System verteilt, worauf sich die anderen Vermittlungsanlagen (VA) selbsttätig synchronisieren.

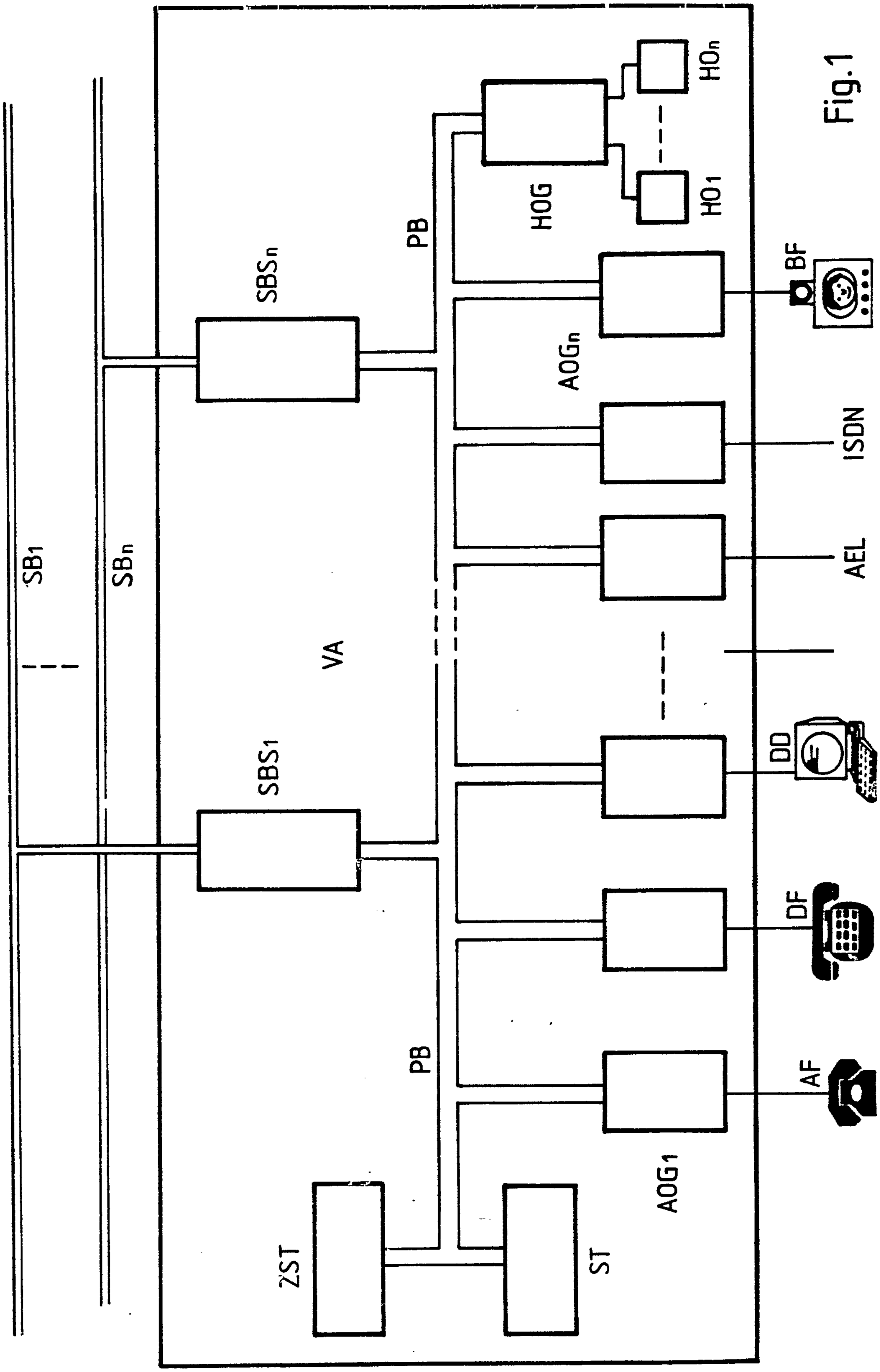
SB1
SBn
SBS1
SBSn
PB
PB
VA
HOG
HO1
HOn
AOGn
AOG1
BF
ISDN
AEL
DD
DF
AF
ZST
ST

Fig.1

TN F 4178

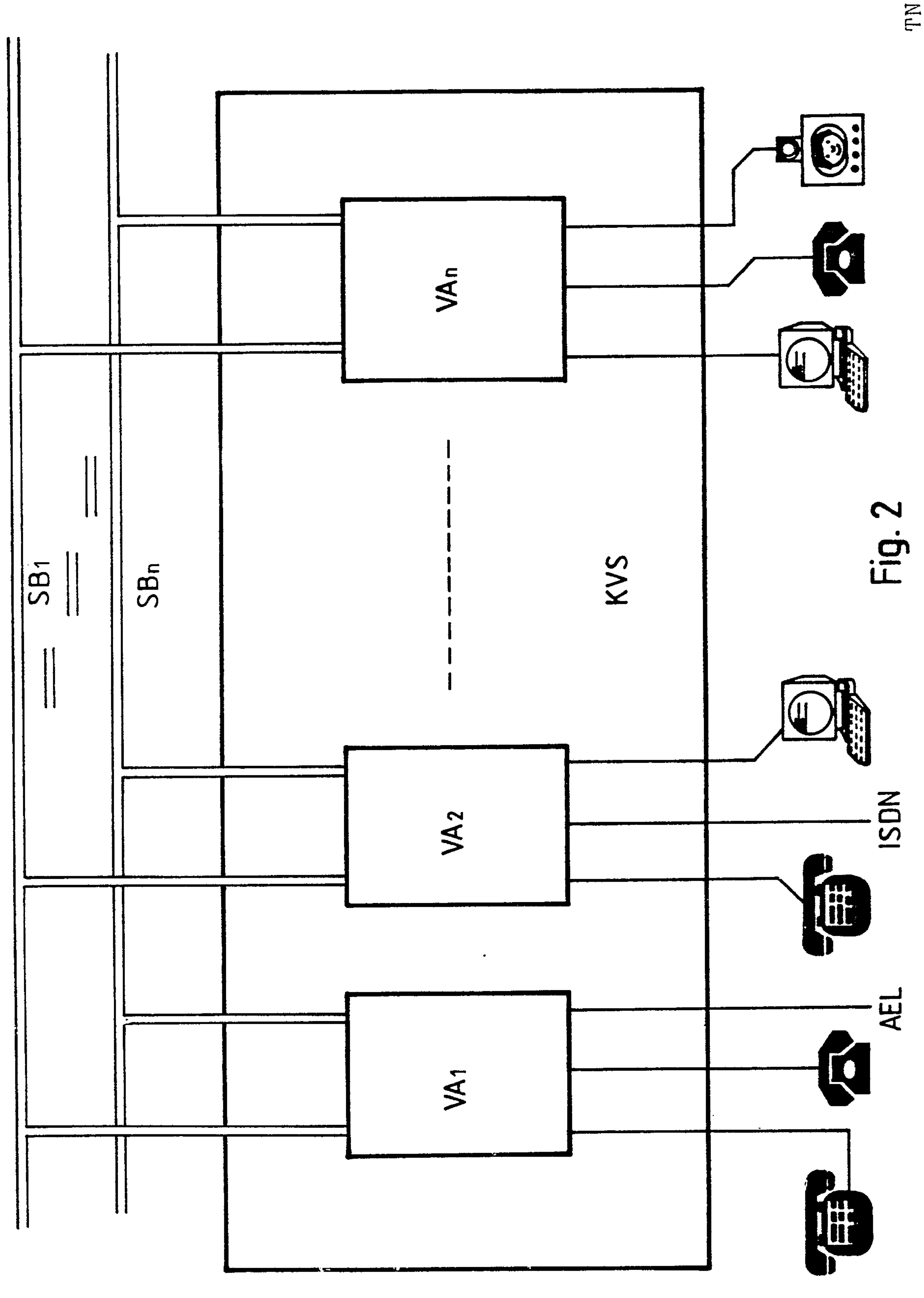


Fig. 2

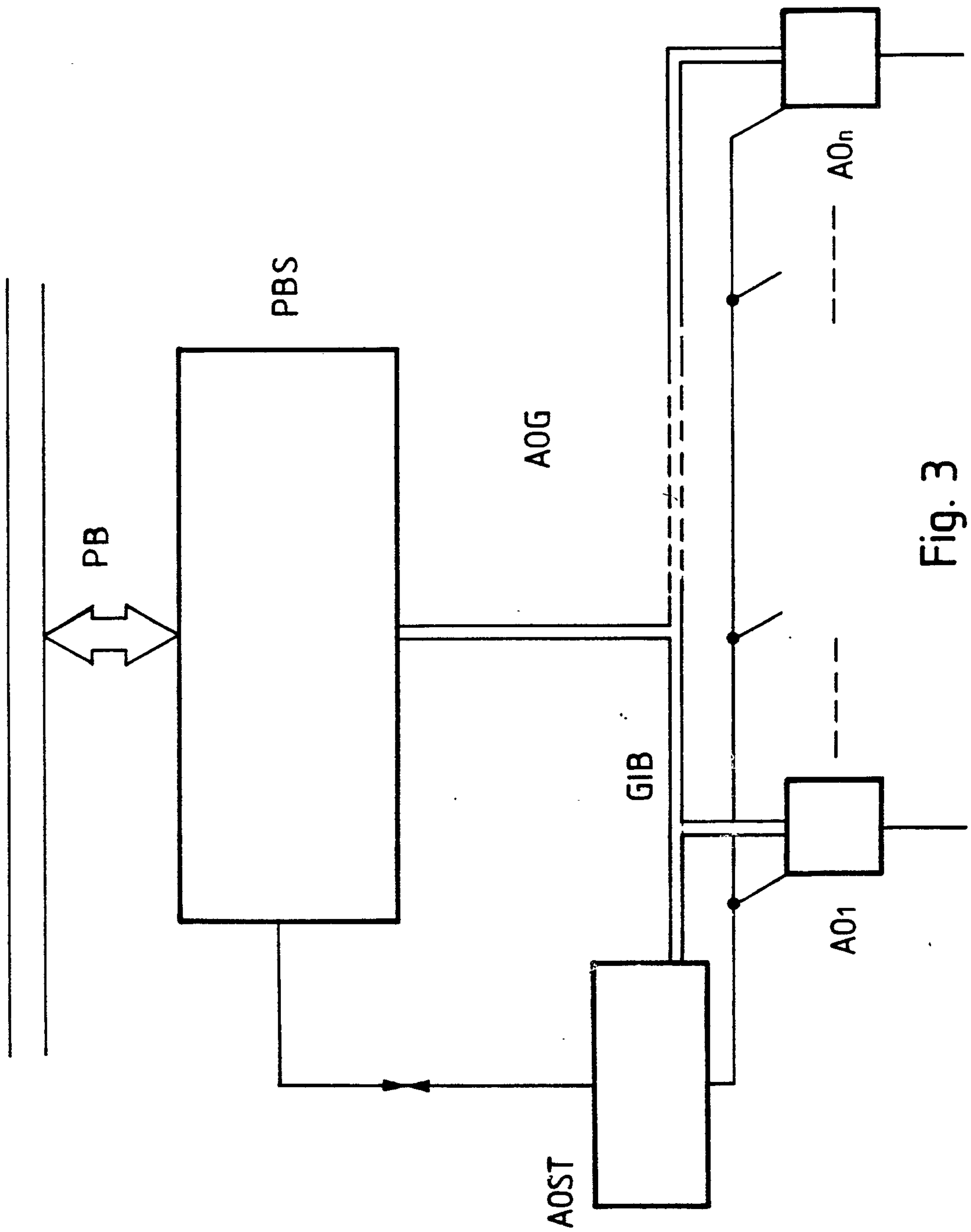


Fig. 3

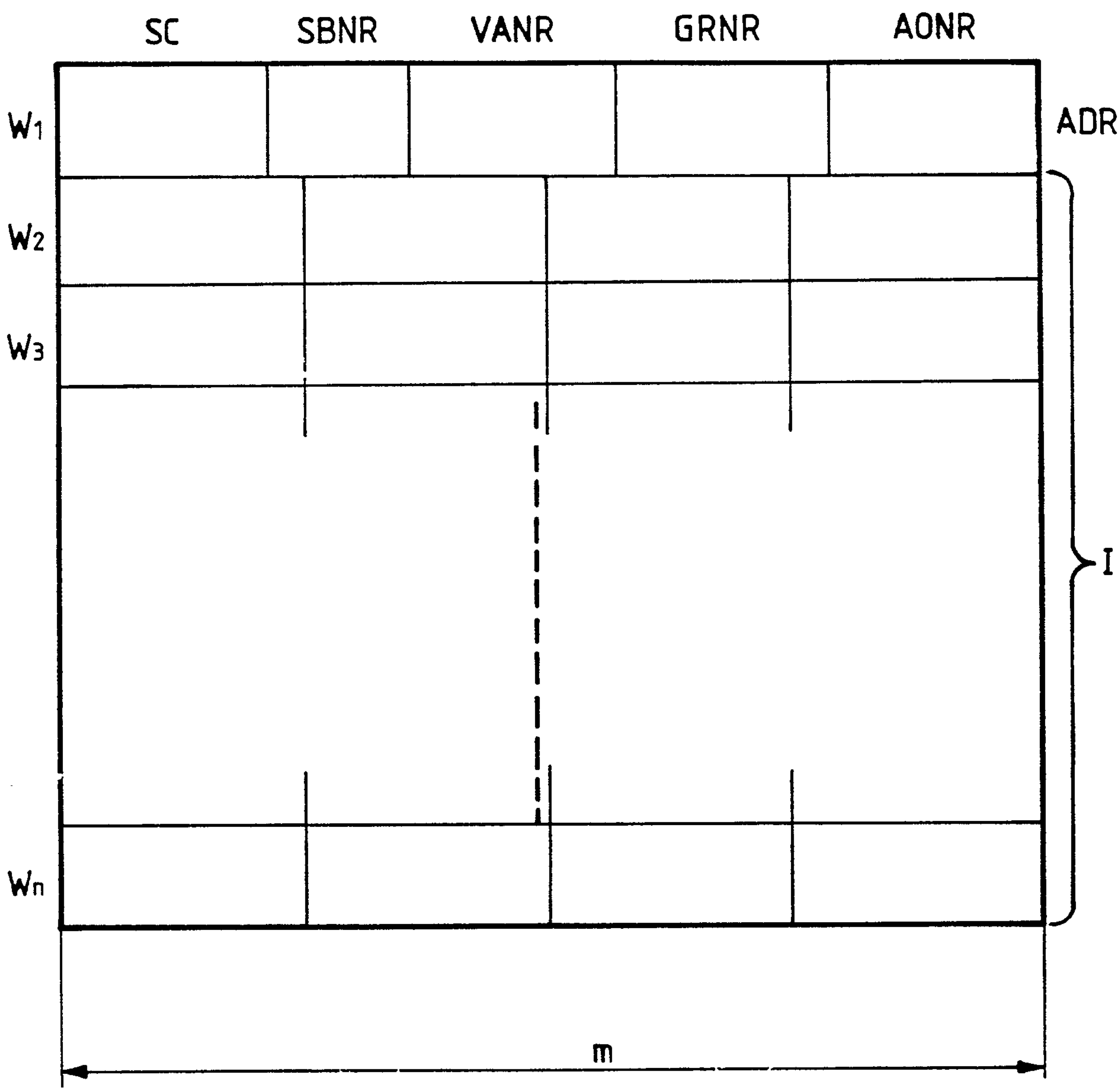


Fig. 4

TN F 4138

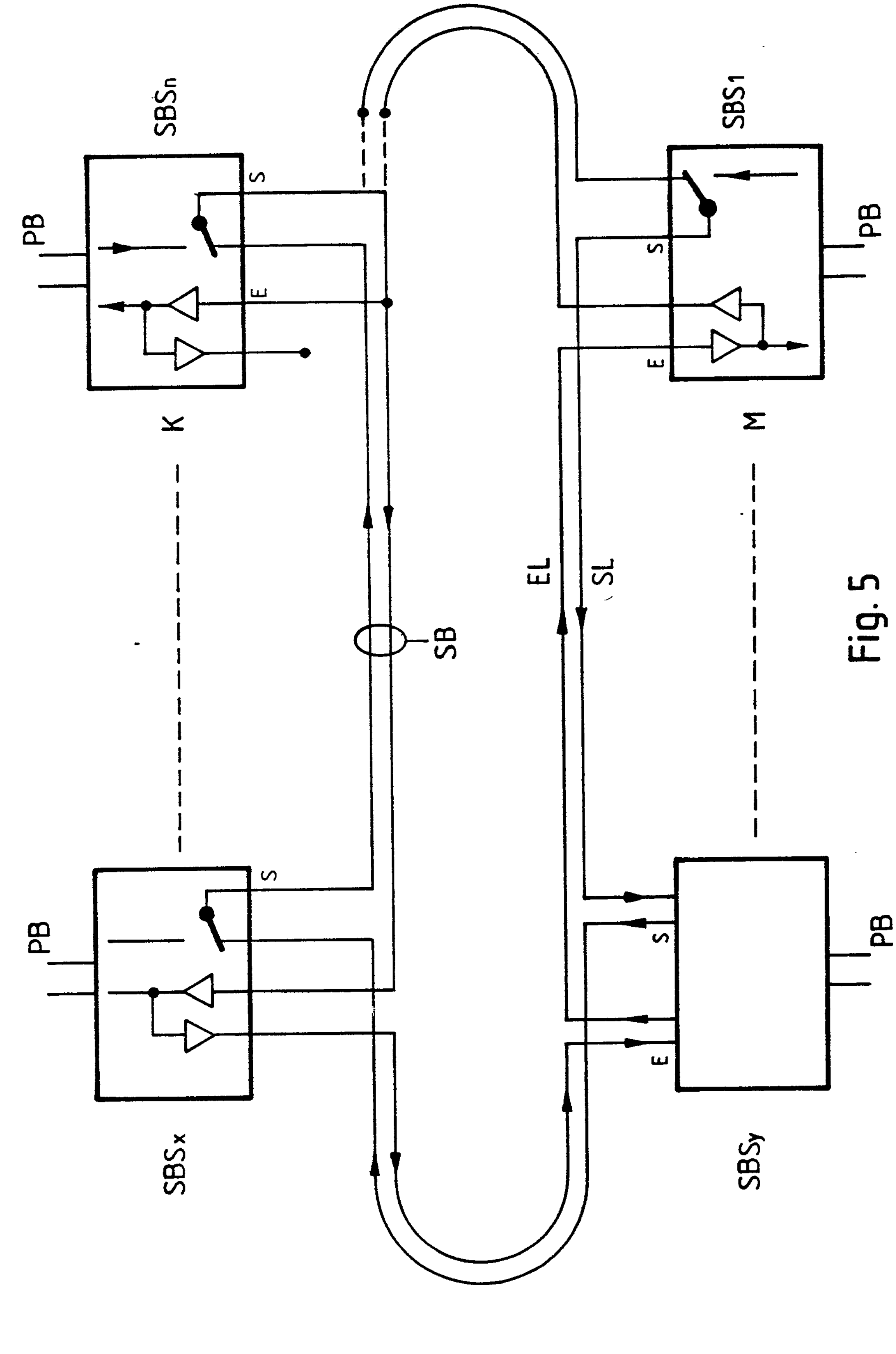


Fig. 5